# EUROPEAN PATENT SPECIFICATION

(11) **EP 3 141 041 B1**
(45) Date of publication and mention of the grant of the patent: **31.07.2019**
(21) Application number: 14742581.3
(22) Date of filing: 09.05.2014
(51) Int. Cl.: H04W 40/32, H04B 7/04

(54) **SYSTEM AND METHOD IMPLEMENTING SPATIAL MULTIPLEXING AND JOINT COORDINATED MULTIPOINT TRANSMISSION OF DATA**
SYSTEM UND VERFAHREN ZUR IMPLEMENTIERUNG VON RÄUMLICHEM MULTIPLEXING UND GEMEINSAMER KOORDINIERTER MEHRPUNKTÜBERTRAGUNG VON DATEN
SYSTÈME ET PROCÉDÉ DE MISE EN OEUVRE DE MULTIPLEXAGE SPATIAL ET DE TRANSMISSION MULTIPOINT COORDONNÉE CONJOINTE DE DONNÉES

(43) Date of publication of application: 15.03.2017
(73) Proprietor: Telefonaktiebolaget LM Ericsson (publ), 164 83 Stockholm (SE)
(72) Inventor: BOUDREAU, Gary, Kanata, Ontario K2K 2K9 (CA); SEYEDMEHDI, Hossein, Toronto, Ontario M4X 1N3 (CA)
(74) Representative: Brann AB
(86) International application number: PCT/IB2014/061346
(87) International publication number: WO 2015/170147

(56) References cited:
- EP-A2- 2 562 940
- WO-A1-2014/064644
- JIANG HAO ET AL: "Virtual MIMO communication based on D2D link", 2013 3RD INTERNATIONAL CONFERENCE ON CONSUMER ELECTRONICS, COMMUNICATIONS AND NETWORKS, IEEE, 20 November 2013 (2013-11-20), pages 718-722, XP032542585, DOI: 10.1109/CECNET.2013.6703432 ISBN: 978-1-4799-2859-0 [retrieved on 2014-01-03]
- SEYEDMEHDI S HOSSEIN ET AL: "An Efficient Clustering Algorithm for Device-to-Device Assisted Virtual MIMO", IEEE TRANSACTIONS ON WIRELESS COMMUNICATIONS, IEEE SERVICE CENTER, PISCATAWAY, NJ, US, vol. 13, no. 3, 1 March 2014 (2014-03-01), pages 1334-1343, XP011543800, ISSN: 1536-1276, DOI: 10.1109/TWC.2014.012114.120283 [retrieved on 2014-03-20]

## Description

### TECHNICAL FIELD

Particular embodiments relate generally to wireless communications and more particularly to a system and method implementing spatial device-to-device multiplexing and joint coordinated multipoint transmission and reception of data in a wireless network.

### BACKGROUND

Demand for wireless communications has put persistent pressure on wireless network operators to improve the capacity of communication networks. In the case of 3GPP and WiFi wireless networks, carrier spectrum is limited. To improve the spectral efficiency (Mbps/MHz), scarce radio resources may be reused aggressively in neighboring cells. As a result, inter-cell interference has become a main source of signal disturbance, limiting not only the service quality to users at the cell edges, but also the overall system throughput.

Solutions for improving spectral efficiency may include interference cancellation via enhanced receiver design or intelligent scheduling, multiple input multiple output techniques that rely on multiples antennas in one wireless device, and/or micro-diversity techniques such as Coordinated Multi-Point (CoMP) transmission and reception of data. For example, CoMP reception in the uplink may be used to mitigate inter-cell interference in International Mobile Telecommunications (IMT) Advanced systems. For the uplink (UL), CoMP reception differs from reception in a conventional system in that uplink signals are received at multiple, geographically dispersed base stations, and then sent across backhaul communication links to a common location for join processing (e.g., to the serving base station). In effect, this architecture forms a "super-cell," called a CoMP cell, where uplink signals that would have been treated by a conventional cell as inter-cell interference are instead treated by the CoMP cell as desired signals. The mitigation in inter-cell interference may significantly improve system performance, especially for users near the edge of a conventional cell.

A publication "JIANG HAO ET AL: 'Virtual MIMO communication based on D2D link', 2013 3rd International Conference on Consumer Electronics, Communications and Networks, IEEE, 20 November 2013 (2013-11-20), XP032542585" discloses enhancing connectivity between single antenna mobile terminals by enabling virtual multiple input multiple output (MIMO) communication based on device-to-device (D2D) links between the mobile terminals.

Sending the received uplink signals across backhaul communication links for joint processing, however, can require significant and potentially prohibitive backhaul bandwidth. For many transmissions, the cooperating node is under a stringent time deadline to deliver the CoMP payload to the serving node for processing. For example, it is desirable that the uplink signals received by a cooperating node be processed and the CoMP payload delivered to the serving node within the time deadline for Hybrid Automatic Repeat Request (HARQ). In Long Term Evolution (LTE) systems, the HARQ timing is typically set to 4ms, so that the HARQ process can assist in exploiting the short term behavior of the wireless channel. Usual solutions deliver the CoMP payload with a latency of less than 500µs, which allows the payload to be useful to the serving cell within the HARQ deadline. The requirement for low latencies drives the peak data rates on the backhaul and requires very high bandwidth on the backhaul.

Even though LTE is by default an asynchronous network, for optimal benefit of CoMP, synchronization of the eNBs in the CoMP cooperating set will serve to maximize the attainable peak and aggregate throughputs. This may result in CoMP payloads from many different nodes being transmitted over the backhaul at the same time causing peak congestion. The average utilization of the links will be low, while the short peaks drive the bandwidth requirement and link costs. Furthermore, existing solutions drive the requirements for links with very high bandwidth to be deployed such that the resultant peak data rates of the latency constrained CoMP payload can be met.

### SUMMARY

In particular example implementations, the proposed solutions may combine local device-to-device (D2D) spatial multiplexing with joint coordinated multipoint (CoMP) transmission and reception of data. Other embodiments may combine local device to device spatial multiplexing with heterogeneous networks and CoMP. Still other embodiments may combine local device to device spatial multiplexing with heterogeneous networks and FFR. Other embodiments may combine macro device to device spatial multiplexing with FFR.

According to some embodiments, a wireless communication device includes one or more processors and a memory containing instructions executable by the one or more processors. The wireless communication device transmits a referencing signal to each of a plurality of wireless devices within range of the wireless communication device. Referencing signals are received from the plurality wireless devices. Based on similarity metrics, a device-to-device cluster is formed with a portion of the wireless devices. A data message is received via a device-to-device communication from each of the wireless device within the device-to-device cluster. The data messages are intended to be transmitted by each wireless device of the portion of the plurality of wireless devices to a respective radio network node servicing the wireless device. A composite data message is formed of the received data messages. A virtual multi input multi output (VMIMO) array is formed with the wireless devices within the device-to-device cluster, and the composite data message is transmitted from the VMIMO array to the radio network nodes.

According to some embodiments, a method in a wireless device includes transmitting a referencing signal to each of a plurality of wireless devices within a range of the wireless communication device. Reference signals are received from the wireless devices. Based on one or more similarity metrics, a device-to-device cluster is formed with a portion of the wireless devices. Data messages are received from each wireless device of the portion of the plurality of the wireless devices within the device-to-device cluster via a device-to-device communication. The data messages are intended to be transmitted by each wireless device of the portion of the plurality of wireless devices to a respective radio network node servicing the wireless device. A composite data message is formed of the received data messages. A virtual multi input multi output (VMIMO) array is formed with the portion of the plurality of wireless devices within the device-to-device cluster. The composite data message is transmitted from the VMIMO array to the radio network nodes.

According to some embodiments, a method in a radio network node includes transmitting, to a plurality of wireless devices, a first request for initiation of a discovery mode. Channel quality information is received from each of the plurality of wireless devices. The channel quality information indicates a quality of each device-to-device communication channel. Based on one or more similarity metrics applied to the channel quality information received from each wireless device, a portion of the plurality of wireless devices is selected for formation of a device-to-device cluster. A second request for the formation of the device-to-device cluster is transmitted to the portion of the plurality of wireless devices selected for the formation of the device-to-device cluster. A composite data message is received from a virtual MIMO array formed by the device-to-device cluster. The composite data message is formed of data messages intended to be transmitted by each wireless device of the portion of the plurality of wireless devices within the device-to-device cluster to a respective radio network node serving the wireless device.

According to some embodiments, a radio network node includes one or more processors and a memory containing instructions executable by the one or more processors. A first request for initiation of a discovery mode is transmitted by the radio network node to a plurality of wireless devices. Channel quality information is received from each of the plurality of wireless devices. The channel quality information indicates a quality of each device-to-device communication channel. Based on one or more similarity metrics applied to the channel quality information received from each of the plurality of wireless devices, a portion of the plurality of wireless devices is selected for formation of a device-to-device cluster. A second request for the formation of the device-to-device cluster is transmitted to the portion of the plurality of wireless devices selected for the formation of the device-to-device cluster. A composite data message is received from a virtual MIMO array formed by the device-to-device cluster. The composite data message is formed of data messages intended to be transmitted by each wireless device of the portion of the plurality of wireless devices within the device-to-device cluster to a respective radio network node serving the wireless device.

According to some embodiments, a system includes a first cluster of a first plurality of wireless devices formed based on one or more similarity metrics. Each of the first plurality of wireless devices exchanges data with remaining first plurality of wireless devices within the first cluster. The exchanged data comprises data intended to be transmitted by each of the first plurality of wireless devices within the first cluster to a respective radio network node servicing that wireless device. The data exchanged with the remaining first plurality of wireless devices in the first cluster is concatenated into a multiplexed data block. A virtual multi-input multi-output (VMIMO) array is formed with antennas of the first plurality of wireless devices within the first cluster and transmit the multiplexed data block. At least one radio network node from the radio network nodes receives the composite data message from the virtual MIMO array formed by first cluster of wireless devices.

Some embodiments of the disclosure may provide one or more technical advantages. For example, certain embodiments may provide a more spectrally efficient implementation of Coordinated Multi-Point (CoMP) transmission of data. Another technical advantage may be improvement of individual and aggregate throughput in cellular systems (both LTE and Wi-Fi) by exploiting idle and active wireless devices to retransmit signals from active wireless devices. In addition to improving capacity and throughput, particular embodiments may also aid in eliminating coverage holes for wireless devices in poor coverage areas.

Still another technical advantage may be the mitigation of the high backhaul costs associated with using CoMP. For example, from a base station or other radio network node perspective, additional processing requirements related to UL and DL CoMP may be reduced or eliminated. According to particular embodiments, the clustering algorithm used to achieve the virtual MIMO gains may be implemented in a distributed manner that minimizes computational load at each radio network node. The clustering algorithm may also minimize bandwidth requirements between radio network nodes to achieve CoMP type gains.

Still another technical advantage may be the alleviation of interference by aggressor networks in a Wi-Fi implementation or co-channel interference for cell edge users in a 3GPP implementation.

Some embodiments may benefit from some, none, or all of these advantages. Other technical advantages may be readily ascertained by one of ordinary skill in the art.

### BRIEF DESCRIPTION OF THE DRAWINGS

For a more complete understanding of the present invention and its features and advantages, reference is now made to the following description, taken in conjunction with the accompanying drawings, in which:
FIGURE 1 is a block diagram illustrating an example of a network;
FIGURE 2 is a block diagram illustrating an example network implementing D2D spatial multiplexing with coordinated multipoint transmission and reception of data;
FIGURE 3 is a flow chart illustrating example embodiments of a method for implementing D2D spatial multiplexing with macro coordinated multipoint transmission and reception of data
FIGURE 4 is a flow chart illustrating example embodiments of another method for implementing D2D spatial multiplexing with macro coordinated multipoint transmission and reception of data;
FIGURE 5 is a signaling diagram illustrating an exchange of signals during the discovery phase of an embodiment of a network;
FIGURE 6 is a block diagram illustrating an example digital modulation reference signal for spatially multiplexed device-to-device communication;
FIGURE 7 is a block diagram illustrating an example network implementing D2D spatial multiplexing in combination with macro cell coordinated multipoint transmission and reception of data and fractional frequency reuse;
FIGURE 8 is a block diagram illustrating an example network implementing D2D spatial multiplexing with macro and small cell coordinated multipoint transmission and reception of data;
FIGURE 9 is a block diagram illustrating an example network implementing D2D spatial multiplexing with macro and small cell coordinated multipoint transmission and reception of data and fractional frequency reuse;
FIGURE 10 is a block diagram illustrating embodiments of a wireless device;
FIGURE 11 is a block diagram illustrating embodiments of a radio access node; and
FIGURE 12 is a block diagram illustrating embodiments of a core network node.

### DETAILED DESCRIPTION

Particular embodiments of the present disclosure may provide solutions to backhaul congestion and link costs. Specifically, wireless devices and other user equipment (UE) may be clustered to form a CoMP set in conjunction with a virtual multiport input multiport output over the cluster. Spatial multiplexing of data may be employed within clusters of active UE's using local device-to-device communication within the cluster and joint CoMP broadcasting of data on the downlink. According to other embodiments, spatial multiplexing of data may be employed with virtual multiport input multiport output (MIMO) transmission of data on the UL to exploit local device-to-device versus macro to cell edge channel capacities for overall macro cell capacity improvement.

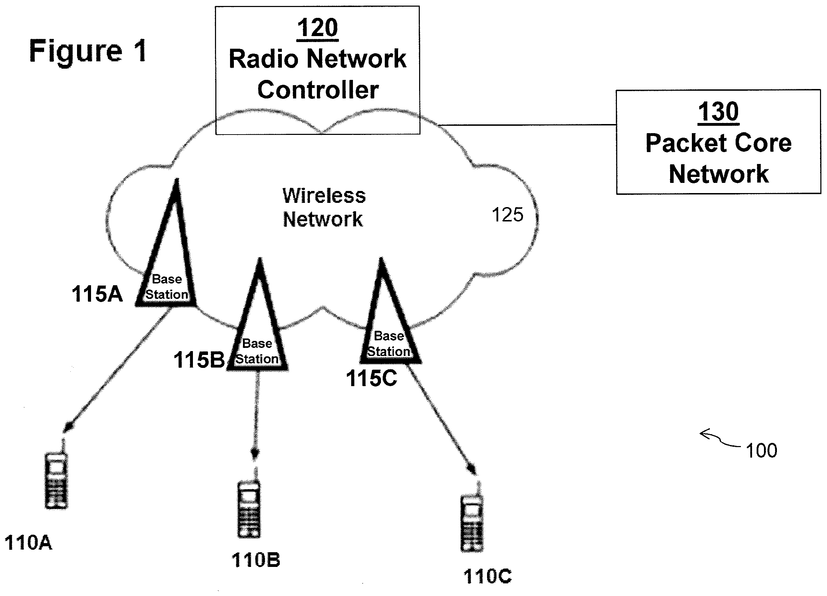

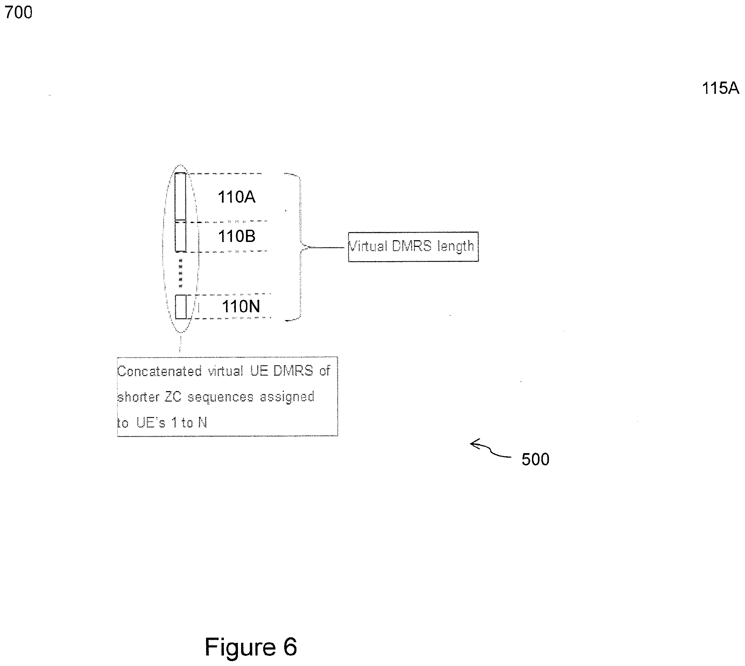

Particular embodiments are described in FIGURES 1-12 of the drawings, like numerals being used for like and corresponding parts of the various drawings. FIGURE 1 is a block diagram illustrating an example of a network 100 that includes one or more wireless communication devices 110 and a plurality of network nodes. The network nodes include radio network nodes 115 and core network nodes 130. In the example, wireless communication device 110a communicates with radio network node 115a over a wireless interface. For example, wireless communication device 110a transmits wireless signals to radio network node 115a and/or receives wireless signals from radio network node 115a. The wireless signals contain voice traffic, data traffic, control signals, and/or any other suitable information.

A radio network node 115 refers to any suitable node of a radio access network/base station system. Examples include a radio access node (such as a base station or eNodeB) and a radio access controller (such as a base station controller or other node in the radio network that manages radio access nodes). Radio network node 115 interfaces (directly or indirectly) with core network node 130. For example, radio network node 115 interfaces with core network node 130 via an interconnecting network 125. Interconnecting network 125 refers to any interconnecting system capable of transmitting audio, video, signals, data, messages, or any combination of the preceding. Interconnecting network 125 may include all or a portion of a public switched telephone network (PSTN), a public or private data network, a local area network (LAN), a metropolitan area network (MAN), a wide area network (WAN), a local, regional, or global communication or computer network such as the Internet, a wireline or wireless network, an enterprise intranet, or any other suitable communication link, including combinations thereof.

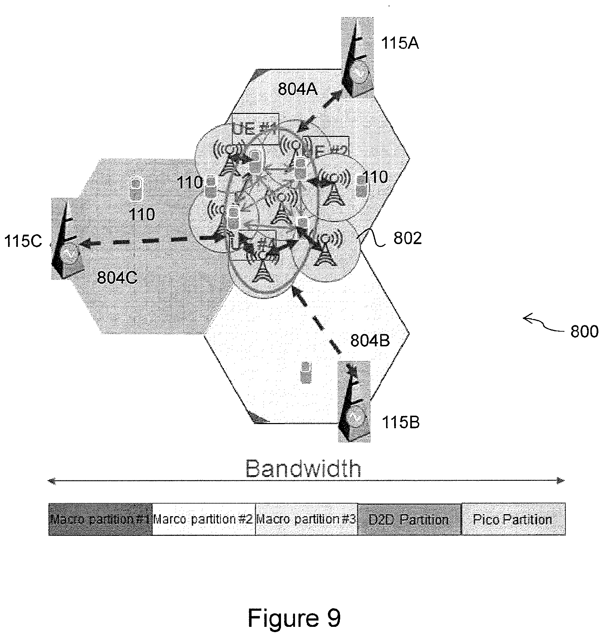

Core network node 130 manages the establishment of communication sessions and various other functionality for wireless communication device 110. Wireless communication device 110 exchanges certain signals with core network node 130 using the non-access stratum layer. In non-access stratum (NAS) signaling, signals between wireless communication device 110 and core network node 130 pass transparently through radio network nodes 120. Examples of wireless communication device 110, radio network node 120, and core network node 130 are described with respect to FIGURES 9, 10, and 11 respectively.

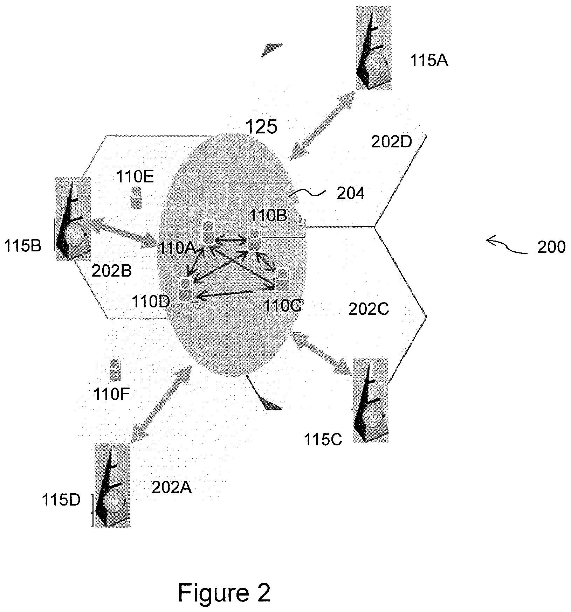

FIGURE 2 is a block diagram illustrating an example network 200 implementing D2D spatial multiplexing with macro coordinated multipoint transmission and reception of data. Network 200 includes multiple radio network nodes 115A-D. Each radio network node 115A-D serves a cell 202A-D. Wireless devices 110A-F located within cells 202A-D are served by the corresponding radio network node 115A-D. For example, wireless device 110A is served by radio network node 115B when located in cell 202B. To mitigate interference resulting from data transmission, a cluster of wireless devices 110A-D form a local group 204 and exchange data with each other before jointly transmitting a composite message of the data of all the wireless devices 110 to radio network nodes 115A-D.

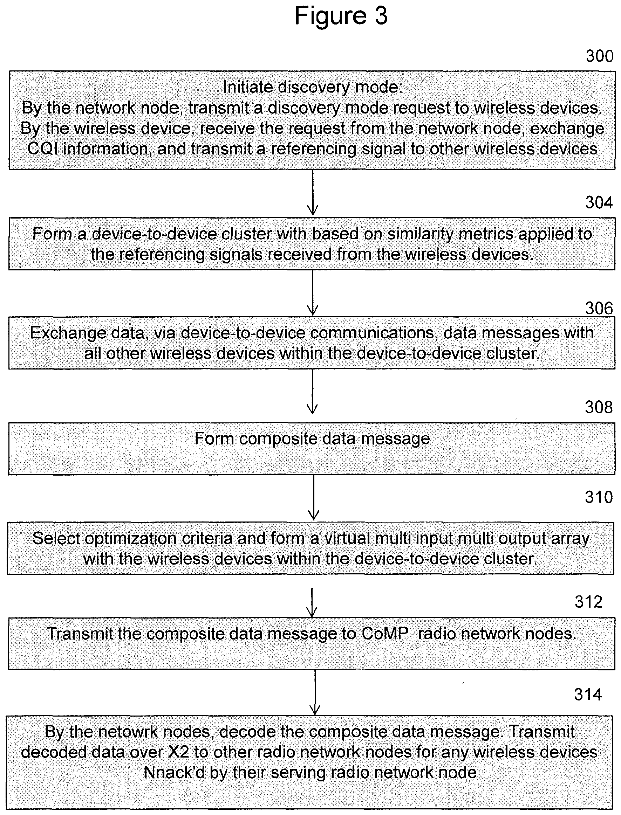

The operations of the network elements of network 200 may best be described with respect to the flowchart of FIGURE 3, which depicts an example embodiment for implementing D2D spatial multiplexing with macro coordinated multipoint transmission and reception of data. As depicted, the method begins at step 300 with the discovery of wireless devices 110 to be clustered together. In this step, wireless devices 110 that are "good" candidates to be clustered together are discovered.

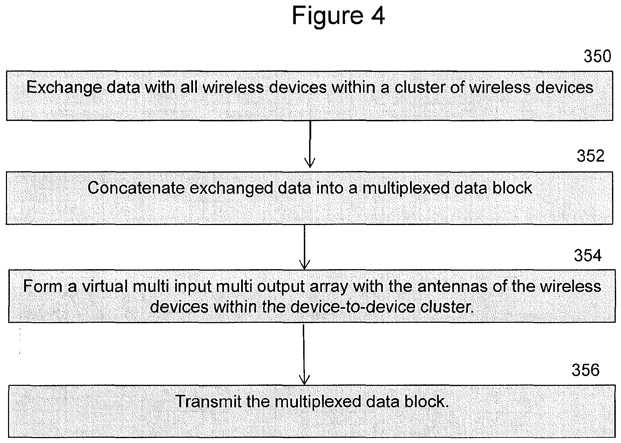

The discovery mode may be an on-going procedure that includes signals being exchanged between radio network devices 115 and wireless devices 110. FIGURE 4 is a signaling diagram illustrating an exchange of signals during the discovery phase of an embodiment of a network. As depicted, a discovery mode activation signal (DMA) 402 may be transmitted from radio network node 115 to wireless devices 110. As shown DMA 402, is transmitted from radio network node 115A to wireless devices 110A-E. Upon receiving DMA 402, wireless devices 110 may activate the discovery mode.

In a particular embodiment, after receiving an activation signal from radio network node 115A, each wireless device 110A-E transmits SRS messages to all other wireless devices 110A-E in the candidate D2D cluster to allow each UE to determine the quality of the all the D2D channels within the potential D2D cluster. In addition each wireless device 110A-E may receive a request for channel quality information (RCQI) 404 from radio network node 115A to determine the channel quality between each wireless device 110A-E and the radio network node 115A. RCQI 404 may include instructions from radio network node 115A for the periodicity and bandwidth (in resource blocks) that wireless devices 110A-E will be used for SRSs 406. RCQI 404 may also indicate which channel quality indicators (CQIs) are required.

In response to RCQI 404, wireless devices 110A-E may estimate the device-to-device channel for multiple frequency ranges. Stated differently, wireless devices 110 may either have channel quality indicators (CQIs) for the whole band (by taking more frames for SRS's) or have CQI's for some sub bands and do the discovery in one (or potentially less) frame. As depicted, each wireless device 110A-E transmits the device-to-device channel frequency information to the requesting radio network device 115A in a CQI signal 408. This approach requires greater latency in the process over a parallel type approach that could exchange the required information in parallel by assigning wireless device specific resource blocks (RBs) in the same symbol for exchange of the CQI information.

Subsequently, the discovery process may include each wireless device 110A-E transmitting a SRS 406 to every other wireless device 110A-E. For example, wireless device 110A may transmit SRS 406A to wireless devices 110B-E. Likewise, wireless device 110B may transmit SRS 406B to wireless devices 110A and 110C-E. In this manner, each wireless device 110A-E transmits a SRS 406 to and receives a SRS 406 from every other wireless device 110A-E.

Returning to FIGURE 3, the method for implementing spatial multiplexing with macro coordinated multipoint transmission and reception of data may continue at step 304 with the formation of device-to-device clusters. The selection of the cluster of wireless devices 110 can be based on a number of similarity metrics that will enable the clustering and multiplexing of data by wireless devices 110 to improve the aggregate signal-to-interference-plus-noise ratio (SINR) and throughput of wireless devices 110 within the cluster. In a particular embodiment, cluster group 204 may include one or more wireless 110 that are near the cell border of their respective serving radio network node 115 and, thus, have a relatively poor SINR (i.e. CQI) to the radio network node 115 but have good local device-to-device CQI with wireless devices 110 in cluster group 204.

In particular embodiments, the similarity metrics may include, but are not restricted to, the quality information received in CQIs 408 from each of wireless devices 110A-F during the discovery phase. As described above, the device-to-device CQI can be measured through local beacon type transmissions between wireless devices 110A-E. Additionally, the CQI to radio network nodes 115 can be measured for example through use of reference signal received power (RSRP) and reference signal received quality (RSRQ) measurements of common reference signal (CRS) or channel state information-reference signal (CSI-RS) transmissions.

Based on the similarity metrics, wireless devices 110 may be chosen for cluster group 204. The selection of wireless devices 110 within a given cluster 204 can be network controlled or autonomous within a cluster group 204. The autonomous cluster selection approach has the advantage of not requiring signaling to radio network nodes 115 of the network and can be implemented by one wireless device 110 serving as a cluster head (CH) for cluster group 204.

At step 306, each wireless device 110 exchanges data with every other wireless device 110 in cluster group 204. The exchanged data may include all data that the wireless devices 110 have to transmit to their respective serving radio network nodes 115. In certain embodiments, the exchange of information may be over another radio access technology (RAT) or within the same RAT and transmission bandwidth as the wireless device 110 to radio network node 115 communications. In a particular embodiment, the exchange of information may be over LTE.

Though device-to-device communication may be straight forward for TDD networks, FDD implementations may require that wireless devices 110 have an additional transceiver operating at the frequency of the DL FDD band. The need for the additional transmitter may be overcome, however, by employing half duplex FDD transmissions on the UL of an FDD band. Furthermore certain embodiments can employ asymmetrical transmission of TDD such as the use of TDD LTE configuration 0 which has 6 of 8 data transmission subframes assigned to the uplink. Note that for the reciprocal process on the DL, that TDD configuration 2 would be appropriate. In certain embodiments, the transmit power of the local device-to-device transmissions may be power controlled. For example, the transmit power may be kept at a relatively low level as compared to normal transmissions to radio network node 115. As a result, the device-to-device transmissions may not generate any significant interference to the macro radio network nodes 115 in the network. For example, wireless devices 110 clustered within tens or hundreds of meters of each other may reliably communicate with power levels 30 dB or less than wireless devices 110 communicating with radio network nodes 115 at distances on the order of kilometers.

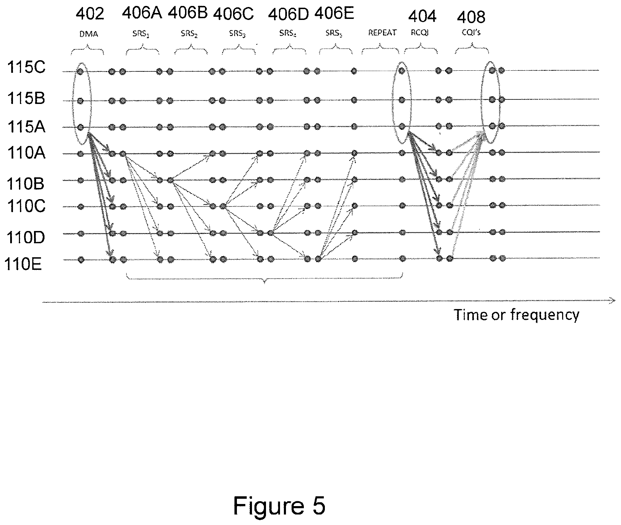

At step 308, a composite data message is formed. In particular embodiments, the formatting and order of transmission of the multiplexed data may be based on a concatenation of granted demodulation reference signals (DMRS). FIGURE 5 is a block diagram illustrating an example digital modulation reference signal 500 for multiplexed device-to-device communication. The DMRS are concatenated to form a larger sequence based on the individual DMRS sequences of each wireless device 110. As depicted, a unique wireless device specific DMRS may be assigned to each wireless device 110 that spans the bandwidth of resource blocks (RBs) that are granted to wireless device 110 for transmission. The total multiplexed bandwidth in RBs will initially be based on the equivalent bandwidth of a concatenated version of the DMRS symbols. The order of the multiplexing can be chosen by a number of methods including (i) network selection, (ii) selection by the radio network node 115, (iii) selection by a wireless device 110 acting as the cluster head for cluster 204 of wireless devices 110, or (iv) a default concatenation based on an ordering from largest to smallest DMRSs.

Returning to FIGURE 3, once the device-to-device cluster 204 has been formed, the wireless devices 110 within the cluster 204 have exchanged the data to be transmitted, and a composite data message has been formed, a virtual MIMO array is formed by the wireless devices 110 within the cluster group 204 at step 310. The MIMO array may be used for the transmission of the multiplexed data back to radio network nodes 115 at step 312. In particular embodiments, if there are N wireless devices 110 in cluster group 204 and M transmit antenna in each wireless device 110, there will be a total of N^{∗}M elements in the MIMO array. Thus, in a baseline case where each wireless device 110 has a single transmit antenna, each wireless device 110 comprises one element of the virtual array. However, if a wireless device 110 has M transmit antennas, then M weights would be assigned to the wireless device 110.

A number of possible approaches may be used to optimize the weights for each element of the virtual MIMO array. Given that all of wireless devices 110 in cluster group 204 will transmit all of the multiplexed data to each of radio network node 115 in the CoMP coordination set, two possible approaches may be used. In a first embodiment, the virtual MIMO weights may be selected to maximize the aggregate throughput at the output of the CoMP combining from the joint processing of radio network nodes 115 in the CoMP set. In a second embodiment, the weights of the virtual MIMO array may be optimized so as to maximize the throughput to radio network node 115 with the best CQI (i.e., SINR) in the CoMP coordination set. In this second embodiment, the virtual MIMO weights may be selected based on the best "selection diversity" of radio network nodes 115 in the CoMP coordinating set.

The composite data message is transmitted to the CoMP radio network nodes at step 312. The CoMP radio network nodes then decode the message at step 314. Once the initial device-to-device multiplex cluster has been assigned, the CQI for the joint virtual MIMO cluster may be measured at the coordinating radio network node 115 of the CoMP set. Rather than setting an individual modulation and coding scheme for each wireless device 110, the link adaptation modulation coding scheme of the device-to-device cluster can be adjusted. In certain embodiments, the modulation coding scheme of the cluster 204 can be adjusted to maximize the throughput of the device-to-device cluster to the radio network nodes 115 in the CoMP coordinating set. In a particular embodiment, the virtual MIMO weights may also be updated for each MCS update to optimize performance of the cluster group 204.

The spatial multiplexed device-to-device approach described with respect to FIGURE 3 may provide certain technical advantages and benefits. A first benefit is the virtual MIMO gain due to the clustering and assigned weights of virtual wireless device. A second benefit may be referred to as a "cluster multiplexing gain for CoMP." Specifically, for the DL, the CoMP transmission from each cell is the maximum for any wireless device 110 in cluster group 204 as opposed to individual CoMP gains for each wireless device. A third benefit may be the device-to-device cluster link adaptation gain.

Furthermore, to minimize CoMP backhaul requirements, a particular radio network node 115 may determine if the radio network node 115 can decode wireless devices 110 that the radio network node 115 is serving within the device-to-device cluster. If the radio network node 115 can decode wireless devices 110, radio network node 115 may send an ACK to other radio network nodes 115 in the CoMP set of cluster group 204. Conversely, if the radio network node 115 cannot successful decode wireless devices 110 in the CoMP set, radio network node 115 may send a NACK. Thereafter, radio network nodes 115 in the CoMP coordinating set may only send data over X2 to other radio network nodes 115 for wireless device 110 data that was not ACK'd by a serving radio network node 115. Because the full set of device-to-device data need not be transmitted, in certain embodiments, CoMP backhaul requirements may be minimized.

FIGURE 4 depicts another example embodiment for implementing, in a wireless device, D2D spatial multiplexing with macro coordinated multipoint transmission and reception of data. As depicted, the method begins at step 350 when data is exchanged with all wireless devices within a cluster of wireless devices. The exchanged data may be data to be transmitted to each serving node serving of a wireless device within the cluster of wireless devices.

In a particular embodiment, the data may be exchanged using device-to-device local exchange. In some embodiments, the data may be exchanged in a manner so as not to interfere with communications exchanged between the wireless devices and their respective network nodes. For example, a wireless device 110 may use a first radio access technology (RAT) to exchange data with all wireless devices 110 in the cluster group 204 and a second RAT to exchange data with its radio network node 115. In another example, a wireless device 110 may use a first transmission bandwidth range to exchange data with wireless devices 110 within the cluster group 204 and a second transmission bandwidth range to exchange data with a radio network node 115.

In certain embodiments, the data may be exchanged using a TDD network for device-to-device local exchange of data. In other embodiments, data may be exchanged on an uplink using HD-FDD.

In certain embodiments, the cluster group 204 may be formed based on one or more metrics. For example, one or more similarity metrics may be used to select wireless devices 110 that exhibit certain similar characteristics. The metrics used to form cluster 204 of wireless devices 110 may include channel quality information (CQI) of wireless device 110 as seen by a radio network node 115 serving the wireless device 110. The CQI may be measured through the use of reference signal received power (RSRP) and reference signal received quality (RSRQ) measurements. Additionally or alternatively, the metrics used to form cluster group 204 may include local device-to-device CQI between wireless devices 110 within cluster group 204.

In a particular embodiment, the formation of the cluster of wireless devices 110 may be network controlled in response to one or more messages from radio network node 115. In other embodiments, the formation of cluster group 204 may be autonomous within the cluster of wireless devices 110 without receiving a message from a radio network node 115. For example, one of the wireless devices 110 within cluster group 204 may act as a cluster head and autonomously select, based one or more metrics, the wireless devices 110 to be included in cluster group 204.

The method continues at step 352 when the data exchanged with all wireless devices in the cluster is concatenated into a multiplexed data block. In certain embodiments, the order of the multiplexed data block may be formed using concatenated demodulated reference signaling (DMRS). At step 354, a virtual multi-input multi-output (VMIMO) array is formed with a plurality of antennas of all wireless devices within the cluster. The MIMO array may be used for the transmission of the multiplexed data back to radio network nodes 115 at step 356. As described above with regard to FIGURE 3, if there are N wireless devices 110 in cluster group 204 and M transmit antenna in each wireless device 110, there may be a total of N^{∗}M elements in the MIMO array. Thus, in a baseline case where each wireless device 110 has a single transmit antenna, each wireless device 110 comprises one element of the virtual array. However, if a wireless device 110 has M transmit antennas, then M weights would be assigned to the wireless device 110.

Also similar to that described above, a number of possible approaches may be used to optimize the weights for each element of the virtual MIMO array. Given that all of wireless devices 110 in cluster group 204 will transmit all of the multiplexed data to each of radio network node 115 in the CoMP coordination set, two possible approaches may be used. In a first embodiment, the virtual MIMO weights may be selected to maximize the aggregate throughput at the output of the CoMP combining from the joint processing of radio network nodes 115 in the CoMP set. In a second embodiment, the weights of the virtual MIMO array may be optimized so as to maximize the throughput to radio network node 115 with the best CQI (i.e., SINR) in the CoMP coordination set. In this second embodiment, the virtual MIMO weights may be selected based on the best "selection diversity" of radio network nodes 115 in the CoMP coordinating set.

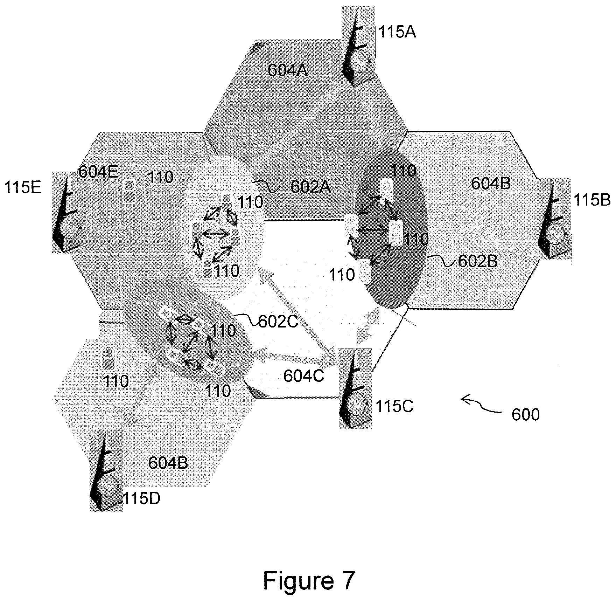

Certain modifications may be made to the system and method described above with regard to FIGURES 2, 3, and 4, respectively. For example, FIGURE 7 is a block diagram illustrating an example network 600 implementing D2D spatial multiplexing with macro coordinated multipoint and fractional frequency reuse, according to certain embodiments. Similar to FIGURE 2, wireless devices 110 are clustered within local device-to-device cluster groups 602A-C. As depicted, each cluster group 602A-C includes four wireless devices 110. However, network 600 can include any appropriate number of cluster groups 602A-C and each cluster group 602A-C may include any number of wireless devices 110.

Within a cluster group 602A-C, the wireless devices 110 may be serviced by differing radio network nodes 115, which may operate at different frequency ranges. For example, cluster group 602A includes wireless devices 110 serviced by neighboring radio network nodes 115A, 115C, and 115E. To reduce interference between neighboring radio network nodes, radio network nodes that border one another may operate within differing frequency ranges. Thus, radio network node 115A operates within frequency partition 604A, radio network node 114C operates within frequency partition 604C, and radio network node 115E operates within frequency partition 604E. However, radio network node 115B and radio network node 115D do not border one another and, thus, may operate in the same frequency partition 604B. As such, radio network node 115B and 115D may be said to employ frequency reuse.

Within a cluster group 602, wireless devices 110 may exchange, with each other, the data to be transmitted to radio network nodes 115. However, in the embodiment depicted in FIGURE 7, fractional frequency reuse is also employed by cluster groups 602A-C to mitigate interference between the different cluster groups 602A-C and the wireless devices 110 of serving radio network nodes 115 outside the cluster groups 602A-C. For example, as described above, cluster group 602A is comprised of wireless devices 110 being served by radio network nodes 115A, 115C, and 115E, which operate within frequency partitions 604A, 604C, and 604E, respectively. As such, data communications exchanged between wireless devices 110 of cluster group 602A may operate within frequency partition 604B, which is different from frequency partitions 604A, 604B, and 604E.

In operation, components of system 600 may perform operations similar to the steps described above with regard to FIGURES 3 and 4. However, frequency reuse orthogonalizes the interference between cluster 604A and radio network nodes 115 outside of the device-to-device cluster 604A. Additionally, in certain embodiments, the virtual MIMO weights and the RBs assigned to a given cluster 604 can also be selected to minimize interference between clusters 604A-C. Specifically the RBs assigned to each cluster 604A-C can be coordinated to either be orthogonal or to minimally interfere with each other in combination with the virtual MIMO beam forming. Furthermore, each radio network node 115A-E may be part of more than one CoMP coordinating set, either as the coordinating radio network node or a participating CoMP radio network node.

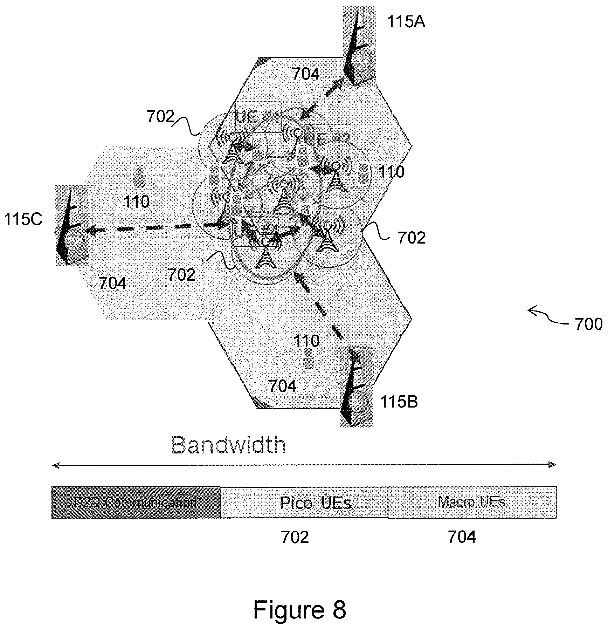

FIGURE 8 illustrates certain further modifications to the above described methods and techniques. Specifically, FIGURE 8 is a block diagram illustrating an example network 700 implementing D2D spatial multiplexing with macro and pico cell coordinated multipoint transmissions. The steps performed by the components of network 700 may be similar to those described above with respect to FIGURE 3 with a few differences that will be described below.

As depicted, the device-to-device clusters can have a span of both intra and inter small cells 702 as well as macro cells 704. For the assignment of RBs to minimize interference, the bandwidth may be partitioned for the device-to-device cluster, the wireless devices 110 of the pico nodes 702 spanning the device-to-device cluster and the wireless devices 110 of the macro nodes 704 spanning the device-to-device cluster. Furthermore, during the device-to-device virtual MIMO and CoMP transmission, the optimization of the virtual MIMO and CoMP coordination can now be across both pico nodes 702 within range of the device-to-device cluster, as well as macro nodes 704.

Given that the device-to-device cluster area may span more than one pico node 702, an additional possible benefit may be that the virtual MIMO may be formed for both the device-to-device cluster as well as at the pico nodes 702 spanning the cluster. Thus, for example, for an uplink implementation of this embodiment, there may be a virtual MIMO gain at both the transmission side of the device-to-device cluster and the reception side of the pico CoMP set. The optimizations of the virtual MIMO weights may then be optimized jointly between the virtual transmit and receive arrays, in certain embodiments. The pico virtual MIMO array concept may also be implemented as part of a distributed antenna system solution, in particular embodiments.

In addition to the benefits noted above, the use of spatial multiplexing with macro and pico cell coordinated multipoint transmissions may also exploit the grouping of the device-to-device cluster and pico nodes 702 into a CoMP serving set to mitigate range expansion link budget issues at the boundary between the pico nodes 702 and the macro cells 704 of the coverage area.

FIGURE 9 illustrates still other modifications to the above described methods and techniques. Specifically, FIGURE 9 is a block diagram illustrating an example network 800 implementing D2D spatial multiplexing with macro and small cell coordinated multipoint and fractional frequency reuse. The steps performed by the components of network 800 may be similar to those described above with respect to FIGURE 3 with a few differences that will be described below.

In the depicted example embodiment, the device-to-device cluster may have a span of both intra and inter small cells 802 as well as macro cells 804A-C. For the assignment of RBs to minimize interference, fractional frequency reuse may be applied across macro nodes 804A-C so that bandwidth is partitioned for the device-to-device cluster, the wireless devices 110 of the pico nodes 802 spanning the device-to-device cluster, and the three fractional frequency reuse regions for the wireless devices 110 of the macro nodes 804 spanning the device-to-device cluster. During the device-to-device virtual MIMO and CoMP transmission, the optimization of the virtual MIMO and CoMP coordination can now be across both the pico nodes 802 within range of the device-to-device cluster, as well as macro nodes 804.

As described with respect to FIGURE 1 above, embodiments of network 100 may include one or more wireless communication devices 110, and one or more different types of network nodes capable of communicating (directly or indirectly) with wireless communication devices 110. Examples of the network nodes include radio network nodes 120 and core network nodes 130. The network may also include any additional elements suitable to support communication between wireless communication devices 110 or between a wireless communication device 110 and another communication device (such as a landline telephone).

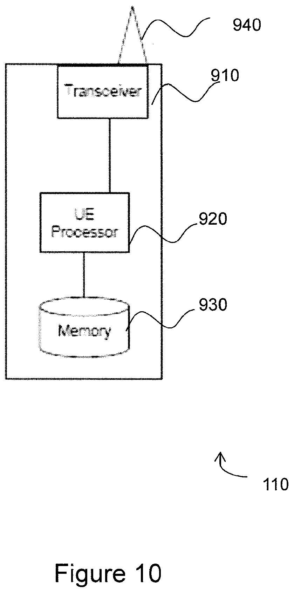

Wireless communication device 110, radio network node 120, and core network node 130 use any suitable radio access technology, such as long term evolution (LTE), LTE-Advanced, UMTS, HSPA, GSM, cdma2000, WiMax, WiFi, another suitable radio access technology, or any suitable combination of one or more radio access technologies. For purposes of example, various embodiments may be described within the context of certain radio access technologies. However, the scope of the disclosure is not limited to the examples and other embodiments could use different radio access technologies. Each of wireless communication device 110, radio network node 120, and core network node 130 include any suitable combination of hardware and/or software. Examples of particular embodiments of wireless communication device 110, radio network node 120, and core network node 130 are described with respect to FIGURES 10, 11, and 12 below, respectively.

FIGURE 10 is a block diagram illustrating an example of wireless communication device 110. Examples of wireless communication device 110 include a mobile phone, a smart phone, a PDA (Personal Digital Assistant), a portable computer (e.g., laptop, tablet), a sensor, a modem, a machine type (MTC) device / machine to machine (M2M) device, laptop embedded equipment (LEE), laptop mounted equipment (LME), USB dongles, a device-to-device capable device, or another device that can provide wireless communication. A wireless communication device 110 may also be referred to as user equipment (UE), a station (STA), a mobile station (MS), a device, a wireless device, or a terminal in some embodiments. Wireless communication device 110 includes transceiver 910, processor 920, and memory 930. In some embodiments, transceiver 910 facilitates transmitting wireless signals to and receiving wireless signals from radio network node 120 (e.g., via an antenna), processor 920 executes instructions to provide some or all of the functionality described above as being provided by wireless communication device 110, and memory 930 stores the instructions executed by processor 920. In a particular embodiment, transceiver 910 includes a first transmitter for communicating with the wireless devices 110 within a cluster 204 at a first frequency and a second transmitter for communicating with the serving radio network node 115 at a second frequency.

Processor 920 includes any suitable combination of hardware and software implemented in one or more modules to execute instructions and manipulate data to perform some or all of the described functions of wireless communication device 110. In some embodiments, processor 920 includes, for example, one or more computers, one or more central processing units (CPUs), one or more microprocessors, one or more applications, and/or other logic.

Memory 930 is generally operable to store instructions, such as a computer program, software, an application including one or more of logic, rules, algorithms, code, tables, etc. and/or other instructions capable of being executed by a processor. Examples of memory 930 include computer memory (for example, Random Access Memory (RAM) or Read Only Memory (ROM)), mass storage media (for example, a hard disk), removable storage media

(for example, a Compact Disk (CD) or a Digital Video Disk (DVD)), and/or or any other volatile or non-volatile, non-transitory computer-readable and/or computer-executable memory devices that store information.

Other embodiments of wireless communication device 110 include additional components (beyond those shown in FIGURE 10) responsible for providing certain aspects of the wireless communication device's functionality, including any of the functionality described above and/or any additional functionality (including any functionality necessary to support the solution described above).

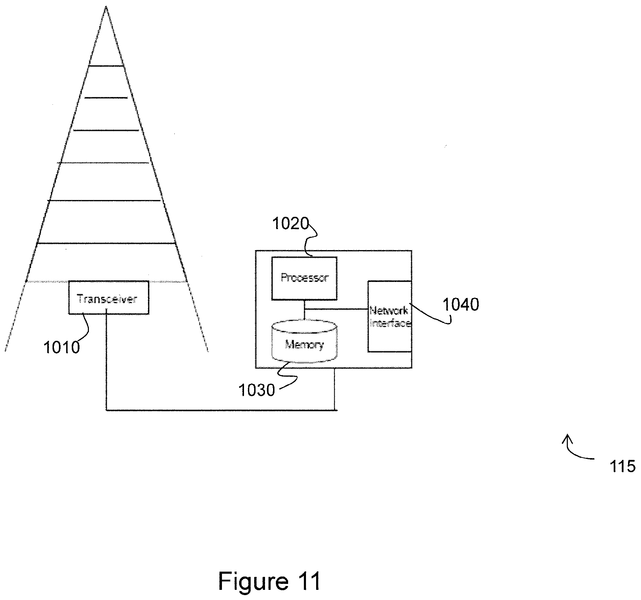

FIGURE 11 is a block diagram illustrating embodiments of radio network node 115. In the illustration, radio network node 115 is shown as a radio access node, such as an eNodeB, a node B, a base station, a wireless access point (e.g., a Wi-Fi access point), a low power node, a base transceiver station (BTS), transmission points, transmission nodes, remote RF unit (RRU), remote radio head (RRH), etc. Other radio network nodes 115, such as one or more radio network controllers, may be configured between the radio access nodes and core network nodes 130. These other radio network nodes 120 may include processors, memory, and interfaces similar to those described with respect to FIGURE 11, however, these other radio network nodes might not necessarily include a wireless interface, such as transceiver 510.

Radio access nodes are deployed throughout network 100 as a homogenous deployment, heterogeneous deployment, or mixed deployment. A homogeneous deployment generally describes a deployment made up of the same (or similar) type of radio access nodes and/or similar coverage and cell sizes and inter-site distances. A heterogeneous deployment generally describes deployments using a variety of types of radio access nodes having different cell sizes, transmit powers, capacities, and inter-site distances. For example, a heterogeneous deployment may include a plurality of low-power nodes placed throughout a macro-cell layout. Mixed deployments include a mix of homogenous portions and heterogeneous portions.

Radio network node 120 includes one or more of transceiver 1010, processor 1020, memory 1030, and network interface 1040. Transceiver 1010 facilitates transmitting wireless signals to and receiving wireless signals from wireless communication device 110 (e.g., via an antenna), processor 1020 executes instructions to provide some or all of the functionality described above as being provided by a radio network 120, memory 1030 stores the instructions executed by processor 1020, and network interface 1040 communicates signals to backend network components, such as a gateway, switch, router, Internet, Public Switched Telephone Network (PSTN), other radio network nodes 120, core network nodes 130, etc.

Processor 1020 includes any suitable combination of hardware and software implemented in one or more modules to execute instructions and manipulate data to perform some or all of the described functions of radio network node 120. In some embodiments, processor 1020 includes, for example, one or more computers, one or more central processing units (CPUs), one or more microprocessors, one or more applications, and/or other logic.

Memory 1030 is generally operable to store instructions, such as a computer program, software, an application including one or more of logic, rules, algorithms, code, tables, etc. and/or other instructions capable of being executed by a processor. Examples of memory 530 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

In some embodiments, network interface 1040 is communicatively coupled to processor 1020 and refers to any suitable device operable to receive input for radio network node 120, send output from radio network node 120, perform suitable processing of the input or output or both, communicate to other devices, or any combination of the preceding. Network interface 1040 includes appropriate hardware (e.g., port, modem, network interface card, etc.) and software, including protocol conversion and data processing capabilities, to communicate through a network.

Other embodiments of radio network node 120 include additional components (beyond those shown in FIGURE 11) responsible for providing certain aspects of the radio network node's functionality, including any of the functionality described above and/or any additional functionality (including any functionality necessary to support the solution described above). The various different types of radio access nodes may include components having the same physical hardware but configured (e.g., via programming) to support different radio access technologies, or may represent partly or entirely different physical components.

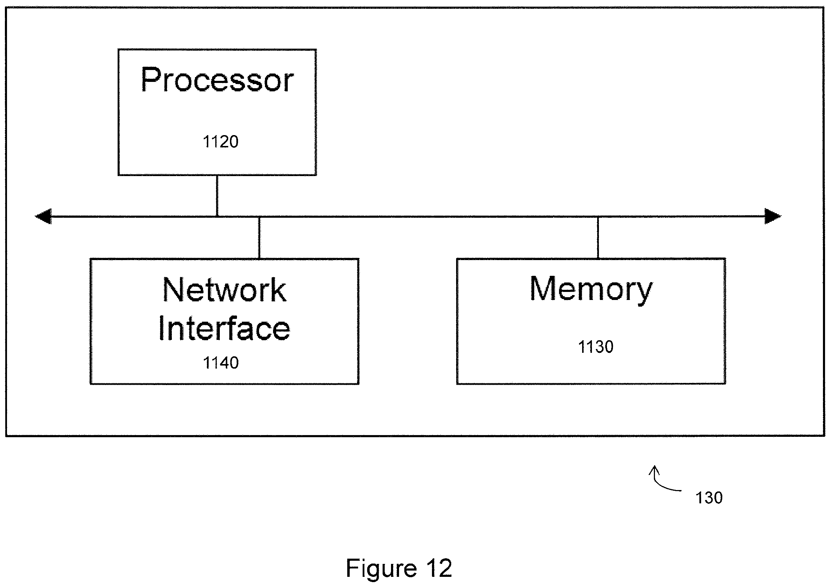

FIGURE 12 is a block diagram illustrating a core network node 130. Examples of core network node 130 can include a mobile switching center (MSC), a serving GPRS support node (SGSN), a mobility management entity (MME), a radio network controller (RNC), a base station controller (BSC), and so on. Core network node 130 includes processor 1120, memory 1130, and network interface 1140. In some embodiments, processor 1120 executes instructions to provide some or all of the functionality described above as being provided by core network node 130, memory 1130 stores the instructions executed by processor 1120, and network interface 1140 communicates signals to an suitable node, such as a gateway, switch, router, Internet, Public Switched Telephone Network (PSTN), radio network nodes 120, other core network nodes 130, etc.

Processor 1120 includes any suitable combination of hardware and software implemented in one or more modules to execute instructions and manipulate data to perform some or all of the described functions of core network node 130. In some embodiments, processor 1120 includes, for example, one or more computers, one or more central processing units (CPUs), one or more microprocessors, one or more applications, and/or other logic.

Memory 1130 is generally operable to store instructions, such as a computer program, software, an application including one or more of logic, rules, algorithms, code, tables, etc. and/or other instructions capable of being executed by a processor. Examples of memory 1130 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

In some embodiments, network interface 1140 is communicatively coupled to processor 1120 and may refer to any suitable device operable to receive input for core network node 130, send output from core network node 130, perform suitable processing of the input or output or both, communicate to other devices, or any combination of the preceding. Network interface 1140 includes appropriate hardware (e.g., port, modem, network interface card, etc.) and software, including protocol conversion and data processing capabilities, to communicate through a network.

Other embodiments of core network node 130 include additional components (beyond those shown in FIGURE 12) responsible for providing certain aspects of the core network node's functionality, including any of the functionality described above and/or any additional functionality (including any functionality necessary to support the solution described above).

Some embodiments of the disclosure may provide one or more technical advantages. For example, certain embodiments may provide a more spectrally efficient implementation of Coordinated Multi-Point (CoMP) transmission of data. Another technical advantage may be improvement of individual and aggregate throughput in cellular systems (both LTE and Wi-Fi) by exploiting idle and active wireless devices to retransmit signals from active wireless devices. In addition to improving capacity and throughput, particular embodiments may also aid in eliminating coverage holes for wireless devices in poor coverage areas.

Still another technical advantage may be the mitigation of the high backhaul costs associated with using CoMP. For example, from a base station or other radio network node perspective, additional processing requirements related to UL and DL CoMP may be reduced or eliminated. According to particular embodiments, the clustering algorithm used to achieve the virtual MIMO gains may be implemented in a distributed manner that minimizes computational load at each radio network node. The clustering algorithm may also minimize bandwidth requirements between radio network nodes to achieve CoMP type gains.

Still another technical advantage may be the alleviation of interference by aggressor networks in a Wi-Fi implementation or co-channel interference for cell edge users in a 3GPP implementation.

Modifications, additions, or omissions may be made to the systems and apparatuses disclosed herein without departing from the scope of the invention. The components of the systems and apparatuses may be integrated or separated. Moreover, the operations of the systems and apparatuses may be performed by more, fewer, or other components. Additionally, operations of the systems and apparatuses may be performed using any suitable logic comprising software, hardware, and/or other logic. As used in this document, "each" refers to each member of a set or each member of a subset of a set.

Modifications, additions, or omissions may be made to the methods disclosed herein without departing from the scope of the invention as disclosed in the appended claims. The methods may include more, fewer, or other steps. Additionally, steps may be performed in any suitable order.

Although this disclosure has been described in terms of certain embodiments, alterations and permutations of the embodiments will be apparent to those skilled in the art. Abbreviations used in the preceding description include:
- CoMP: Coordinated Multipoint
- UL: Uplink
- UE: User Equipment
- D2D: Device-to-Device
- AP: Access Point
- DM: Discovery Mode
- DMA: Discovery Mode Activation
- DMRS: Digital Modulation Reference Signal
- EA: Eligible Assistant
- MCS: Modulation and Coding Scheme
- PI: Processing Interval
- RB: Resource Block
- TB: Transport Block
- TP: Transmit Period
- VMIMO: Virtual Multi Input Multi Output

## Claims

1. A wireless communication device (110), comprising:
one or more processors (920); and
a memory (930) containing instructions executable by the one or more processors (920) whereby the wireless communication device (110) is configured to:
transmit a referencing signal to each of a plurality of wireless devices (110A-E) within a range of the wireless communication device (110);
receive, from the plurality wireless devices (110A-E), a plurality of referencing signals;
form a device-to-device cluster (204) with a portion of the plurality of wireless devices (110A-D), the device-to-device cluster (204) formed based on one or more similarity metrics;
receive, via a device-to-device communication, a data message from each wireless device of the portion of the plurality of wireless devices (110A-D) within the device-to-device cluster (204), the data messages intended to be transmitted by each wireless device of the portion of the plurality of wireless devices (110A-D) to a respective radio network node of radio network nodes (115A-D), the respective radio network node servicing the wireless device with Coordinated Multi-Point, CoMP, data transmission;
form a composite data message of the received data messages;
form a virtual multi input multi output array, VMIMO, with the portion of the plurality of wireless devices (110A-D) within the device-to-device cluster (204); and
transmit the composite data message from the, VMIMO, array to the radio network nodes (115A-D).

2. The wireless communication device (110) of Claim 1, further configured to:
format an order of transmission of the received data messages before transmitting the composite data message to the radio network nodes (115A-D), the formatted order based on a concatenation of demodulation reference signals from each wireless device of the portion of the plurality of wireless devices (110A-D) within the device-to-device cluster (204).

3. The wireless communication device of Claim 1, further configured to:
prior to transmitting the composite data message to the radio network nodes (115A-D), apply a weight to each antenna of the portion of the plurality of wireless devices (110A-D) within the device-to-device cluster (204), wherein the weight applied to each respective antenna of the portion of the plurality of wireless devices (110A-D) is selected to maximize one of an aggregate throughput at an output of a Coordinated Multi-Point, CoMP, communications and a throughput to a radio network node in the radio network nodes (115A-D) with the best channel quality indicators, CQI.

4. A method in a wireless communication device (110), comprising:
transmitting (300) a referencing signal to each of a plurality of wireless devices (110A-E) within a range of the wireless communication device (110);
receiving, from the plurality wireless devices (110A-E), a plurality of referencing signals;
forming (304) a device-to-device cluster (204) with a portion of the plurality of wireless devices (110A-D), the device-to-device cluster (204) formed based on one or more similarity metrics;
receiving (306), via a device-to-device communication, a data message from each wireless device of the portion of the plurality of wireless devices (110A-D) within the device-to-device cluster (204), the data messages intended to be transmitted by each wireless device of the portion of the plurality of wireless devices (110A-D) to a respective radio network node of radio network nodes (115A-D), the respective radio network node servicing the wireless device with Coordinated Multi-Point, CoMP, data transmission;
forming (308) a composite data message of the received data messages;
forming (310) a virtual multi input multi output, VMIMO, array with the portion of the plurality of wireless devices (110A-D) within the device-to-device cluster (204); and
transmitting (312) the composite data message from the VMIMO array to the radio network nodes (115A-D).

5. The method of Claim 4, further comprising:
formatting an order of transmission of the composite data message before transmitting the composite data message to the radio network nodes (115A-D), the formatted order of the composite data message based on a concatenation of demodulation reference signals received from each wireless device of the portion of the plurality of wireless devices (11 0A-D) within the device-to-device cluster (204).

6. The method of Claim 4, further comprising:
prior to transmitting the composite data message to the radio network nodes (115A-D), applying a weight to each antenna of the portion of the plurality of wireless devices (110A-D) within the device-to-device cluster (204), wherein the weight applied to each respective antenna of the portion of the plurality of wireless devices (110A-D) is selected to maximize one of an aggregate throughput at an output of a Coordinated Multi-Point, CoMP, communications and a throughput to a radio network node in the radio network nodes (115A-D), with the best channel quality indicators, CQI.

7. A method in a radio network node (120) servicing wireless devices with Coordinated Multi-Point, CoMP, data transmission, comprising:
transmitting (300), to a plurality of wireless devices (110A-E), a first request for initiation of a discovery mode;
receiving, from each of the plurality of wireless devices (110A-E), channel quality information indicating a quality of each device-to-device communication channel;
selecting (304), based on one or more similarity metrics applied to the channel quality information received from each of the plurality of wireless devices (110A-E), a portion of the plurality of wireless devices (110A-D) for formation of a device-to-device cluster (204);
transmitting, to the portion of the plurality of wireless devices (110A-D) selected for the formation of the device-to-device cluster (204), a second request for the formation of the device-to-device cluster (204); and
receiving (312), from a virtual multi input multi output array, VMIMO, array formed by the device-to-device cluster (204), a composite data message formed of data messages intended to be transmitted by each wireless device of the portion of the plurality of wireless devices (110A-D) within the device-to-device cluster (204), to a respective radio network node serving the wireless device.

8. The method of Claim 7, wherein the radio network node (120) is further configured to minimize Coordinated Multi-Point, CoMP, backhaul requirements by:
determining that the radio network node (120) is able to decode one or more of the portion of the plurality of wireless devices (110A-D) that the radio network node (120) is serving within the device-to-device cluster (204);
send an acknowledgement, ACK, to the one or more additional radio network nodes (115A-D) in a CoMP set of the device-to-device cluster (204); and thereafter only send data over X2 to the one or more additional radio network nodes (115A-D) for data that was not acknowledged by radio network node (120).

9. A radio network node (120) servicing wireless devices with Coordinated Multipoint, CoMP, data transmission, comprising:
one or more processors (1020); and
memory (1030) containing instructions executable by the one or more processors (1020) whereby the radio network node (120) is operable to:
transmit, to a plurality of wireless devices (110A-E), a first request for initiation of a discovery mode;
receive, from each of the plurality of wireless devices (110A-E), channel quality information indicating a quality of each device-to-device communication channel;
select, based on one or more similarity metrics applied to the channel quality information received from each of the plurality of wireless devices (110A-E), a portion of the plurality of wireless devices (110A-D) for formation of a device-to-device cluster (204);
transmit, to the portion of the plurality of wireless devices (110A-D) selected for the formation of the device-to device cluster (204), a second request for the formation of the device-to-device cluster (204); and
receive, from a virtual multi input multi output, VMIMO, array formed by the device-to-device cluster (204), a composite data message formed of data messages intended to be transmitted by each wireless device of the portion of the plurality of wireless devices (110A-D) within the device-to-device cluster (204) to a respective radio network node serving the wireless device.

10. A system comprising:
a first cluster (602A) of a first plurality of wireless devices (110), the first cluster being formed based on one or more similarity metrics, each of the first plurality of wireless devices (110) configured to:
exchange data with remaining first plurality of wireless devices within the first cluster (602A), wherein the exchanged data comprises data intended to be transmitted by each of the first plurality of wireless devices (110) within the first cluster (602A) to a respective radio network node (115A-E) servicing the wireless device (110) with Coordinated Multi-Point, CoMP, data transmission;
concatenate the data exchanged with the remaining first plurality of wireless devices in the first cluster (602A) into a composite data message; and form a virtual multi-input multi-output, VMIMO, array with antennas of the first plurality of wireless devices (110) within the first cluster (602A); and
transmit the composite data message.
wherein at least one radio network node from the radio network nodes (115A-E) is configured to receive, from the, VMIMO, array formed by the first cluster (602A) of the first plurality of wireless devices (110), the composite data message.

11. The system of Claim 10, wherein:
the first cluster (602A) of the first plurality of wireless devices (110) comprises:
a first wireless device serviced by a first radio network node operating at a first frequency range; and
a second wireless device serviced by a second radio network node that neighbors the first radio network node, the second radio network node operating at a second frequency range that is distinct from the first frequency range to mitigate interference,
wherein the first plurality of wireless devices within the first cluster (602A) exchange data on a third frequency range that is distinct from the first frequency range and the second frequency range.

12. The system of Claim 11, further comprising:
a second cluster (602B) of a second plurality of wireless devices (110) configured to:
exchange data with remaining second plurality of wireless devices within the second cluster (602B);
concatenate the data exchanged with the remaining second plurality of devices in the second cluster (602B) into a composite data message; and
form a virtual multi-input multi-output, VMIMO, array with antennas of the second plurality of wireless devices (110) within the second cluster (602B); and
transmit the composite data message,
wherein at least one wireless device within the second cluster (602B) is serviced by the first radio network node operating at the first frequency range.

13. The system of Claim 12, wherein:
the second cluster (602B) is positioned to neighbor the first cluster (602A), and
the second plurality of wireless devices (110) within the second cluster exchange data on a fourth frequency range that is distinct from the first, the second, and the third frequency ranges.

14. The system of Claim 12, wherein:
the second cluster (602B) is separated from the first cluster (602A) such that the second cluster (602B) is not a neighbor of the first cluster (602A), and
the second plurality of wireless devices within (110) the second cluster exchange data on the first frequency range.

15. The system of Claim 11, further comprising a pico node (702) spanning the second cluster (602B), the pico node operating within a fourth frequency range that is distinct from the first, the second, and the third frequency ranges.

## Patentansprüche

1. Drahtlose Kommunikationsvorrichtung (110), umfassend:
einen oder mehrere Prozessoren (920); und
einen Speicher (930), der durch den einen oder die mehreren Prozessoren (920) ausführbare Anweisungen enthält, wodurch die drahtlose Kommunikationsvorrichtung (110) für Folgendes konfiguriert ist:
Übertragen eines referenzierenden Signals an jede einer Vielzahl von drahtlosen Vorrichtungen (110A-E) innerhalb einer Reichweite der drahtlosen Kommunikationsvorrichtung (110);
Empfangen einer Vielzahl von referenzierenden Signalen von der Vielzahl von drahtlosen Vorrichtungen (110A-E);
Bilden eines Vorrichtung-Vorrichtung-Clusters (204) mit einem Teil der Vielzahl von drahtlosen Vorrichtungen (110A-D), wobei der Vorrichtung-Vorrichtung-Cluster (204) auf Grundlage einer oder mehrerer Ähnlichkeitsmetriken gebildet ist;
Empfangen einer Datennachricht von jeder drahtlosen Vorrichtung des Teils der Vielzahl von drahtlosen Vorrichtungen (110A-D) innerhalb des Vorrichtung-Vorrichtung-Clusters (204) über eine Vorrichtung-Vorrichtung-Kommunikation, wobei die Datennachrichten dazu gedacht sind, durch jede drahtlose Vorrichtung des Teils der Vielzahl von drahtlosen Vorrichtungen (110A-D) an einen jeweiligen Funknetzknoten von Funknetzwerkknoten (115A-D) übertragen zu werden, wobei der jeweilige Funknetzknoten die drahtlose Vorrichtung mit koordinierter Mehrpunkt (CoMP)-Datenübertragung bedient;
Bilden einer zusammengesetzten Datennachricht der empfangen Datennachrichten;
Bilden eines virtuellen Mehrfacheingang-Mehrfachausgang (VMIMO)-Arrays mit dem Teil der Vielzahl von drahtlosen Vorrichtungen (110A-D) innerhalb des Vorrichtung-Vorrichtung-Clusters (204); und
Übertragen der zusammengesetzten Datennachricht von dem VMIMO-Array an die Funknetzknoten (115A-D).

2. Drahtlose Kommunikationsvorrichtung (110) nach Anspruch 1, die ferner für Folgendes konfiguriert ist:
Aufbereiten einer Reihenfolge der Übertragung der empfangenen Datennachrichten vor dem Übertragen der zusammengesetzten Datennachricht an die Funknetzknoten (115A-D), wobei die aufbereitete Reihenfolge auf einer Konkatenation von Demodulationsreferenzsignalen von jeder drahtlosen Vorrichtung des Teils der Vielzahl von drahtlosen Vorrichtungen (111A-D) innerhalb des Vorrichtung-Vorrichtung-Clusters (204) basiert.

3. Drahtlose Kommunikationsvorrichtung nach Anspruch 1, die ferner für Folgendes konfiguriert ist:
vor dem Übertragen der zusammengesetzten Datennachricht an die Funknetzknoten (115A-D), Anwenden einer Gewichtung an jeder Antenne des Teils der Vielzahl von drahtlosen Vorrichtungen (110A-D) innerhalb des Vorrichtung-Vorrichtung-Clusters (204),
wobei die an jeder jeweiligen Antenne des Teils der Vielzahl von drahtlosen Vorrichtungen (110A-D) angewendete Gewichtung ausgewählt ist, um einen von einem aggregierten Datendurchsatz an einem Ausgang einer koordinierten Mehrfachpunkt (CoMP)-Kommunikation und einem Datendurchsatz zu einem Funknetzknoten in den Funknetzknoten (115A-D) mit den besten Kanalqualitätsindikatoren (CQI) zu maximieren.

4. Verfahren in einer drahtlosen Kommunikationsvorrichtung (110), das Folgendes umfasst:
Übertragen (300) eines referenzierenden Signals an jede einer Vielzahl von drahtlosen Vorrichtungen (110A-E) innerhalb einer Reichweite der drahtlosen Kommunikationsvorrichtung (110);
Empfangen einer Vielzahl von referenzierenden Signalen von der Vielzahl von drahtlosen Vorrichtungen (110A-E);
Bilden (304) eines Vorrichtung-Vorrichtung-Clusters (204) mit einem Teil der Vielzahl von drahtlosen Vorrichtungen (110A-D), wobei der Vorrichtung-Vorrichtung-Cluster (204) auf Grundlage einer oder mehrerer Ähnlichkeitsmetriken gebildet ist;
Empfangen (306) einer Datennachricht von jeder drahtlosen Vorrichtung des Teils der Vielzahl von drahtlosen Vorrichtungen (110A-D) innerhalb des Vorrichtung-Vorrichtung-Clusters (204) über eine Vorrichtung-Vorrichtung-Kommunikation, wobei die Datennachrichten dazu gedacht sind, durch jede drahtlose Vorrichtung des Teils der Vielzahl von drahtlosen Vorrichtungen (110A-D) an einen jeweiligen Funknetzknoten von Funknetzwerkknoten (115A-D) übertragen zu werden, wobei der jeweilige Funknetzknoten die drahtlose Vorrichtung mit koordinierter Mehrpunkt (CoMP)-Datenübertragung bedient;
Bilden (308) einer zusammengesetzten Datennachricht der empfangen Datennachrichten;
Bilden (310) eines virtuellen Mehrfacheingang-Mehrfachausgang (VMIMO)-Arrays mit dem Teil der Vielzahl von drahtlosen Vorrichtungen (110A-D) innerhalb des Vorrichtung-Vorrichtung-Clusters (204); und
Übertragen (312) der zusammengesetzten Datennachricht von dem VMIMO-Array an die Funknetzknoten (115A-D).

5. Verfahren nach Anspruch 4, ferner umfassend:
Aufbereiten einer Reihenfolge der Übertragung der empfangenen Datennachricht vor dem Übertragen der zusammengesetzten Datennachricht an die Funknetzknoten (115A-D), wobei die aufbereitete Reihenfolge der zusammengesetzten Datennachricht auf einer Konkatenation von Demodulationsreferenzsignalen, die von jeder drahtlosen Vorrichtung des Teils der Vielzahl von drahtlosen Vorrichtungen (110A-D) innerhalb des Vorrichtung-Vorrichtung-Clusters (204) empfangen werden, basiert.

6. Verfahren nach Anspruch 4, ferner umfassend:
vor dem Übertragen der zusammengesetzten Datennachricht an die Funknetzknoten (115A-D), Anwenden einer Gewichtung an jeder Antenne des Teils der Vielzahl von drahtlosen Vorrichtungen (110A-D) innerhalb des Vorrichtung-Vorrichtung-Clusters (204),
wobei die an jeder jeweiligen Antenne des Teils der Vielzahl von drahtlosen Vorrichtungen (110A-D) angewendete Gewichtung ausgewählt ist, um einen von einem aggregierten Datendurchsatz an einem Ausgang einer koordinierten Mehrfachpunkt (CoMP)-Kommunikation und einem Datendurchsatz zu einem Funknetzknoten in den Funknetzknoten (115A-D) mit den besten Kanalqualitätsindikatoren (CQI) zu maximieren.

7. Verfahren in einem Funknetzknoten (120), der drahtlose Vorrichtungen mit koordinierter Mehrfachpunkt (CoMP)-Datenübertragung bedient, das Folgendes umfasst:
Übertragen (300) einer ersten Anforderung zur Einleitung eines Suchmodus an eine Vielzahl von drahtlosen Vorrichtungen (110A-E) ;
Empfangen von Kanalqualitätsinformationen, die eine Qualität jedes Vorrichtung-Vorrichtung-Kommunikationskanals angeben, von jeder der Vielzahl von drahtlosen Vorrichtungen (110A-E);
Auswählen (304) eines Teils der Vielzahl von drahtlosen Vorrichtungen (110A-D) zur Bildung eines Vorrichtung-Vorrichtung-Clusters (204) auf Grundlage einer oder mehrerer Ähnlichkeitsmetriken, die auf die von jeder der Vielzahl von drahtlosen Vorrichtungen (110A-E) empfangenen Kanalqualitätsinformationen angewendet werden;
Übertragen einer zweiten Anforderung zur Bildung des Vorrichtung-Vorrichtung-Clusters (204) an den Teil der Vielzahl von drahtlosen Vorrichtungen (110A-D), der zur Bildung des Vorrichtung-Vorrichtung-Clusters (204) ausgewählt wurde; und
Empfangen (312), von einem durch den Vorrichtung-Vorrichtung-Cluster (204) gebildeten virtuellen Mehrfacheingang-Mehrfachausgang (VMIMO)-Array, einer zusammengesetzten Datennachricht, die aus Datennachrichten gebildet ist, die dazu gedacht sind, durch jede drahtlose Vorrichtung des Teils der Vielzahl von drahtlosen Vorrichtungen (110A-D) innerhalb des Vorrichtung-Vorrichtung-Clusters (204) an einen jeweiligen Funknetzknoten, der die drahtlose Vorrichtung bedient, übertragen zu werden.

8. Verfahren nach Anspruch 7, wobei der Funknetzknoten (120) ferner dazu konfiguriert ist, koordinierte Mehrfachpunkt (CoMP)-Backhaul-Anforderungen durch Folgendes zu minimieren:
Bestimmen, dass der Funknetzknoten (120) in der Lage ist, eine oder mehrere des Teils der Vielzahl von drahtlosen Vorrichtungen (110A-D), den der Funknetzknoten (120) innerhalb des Vorrichtung-Vorrichtung-Clusters (204) bedient, zu decodieren;
Senden einer Empfangsbestätigung (ACK) an den einen oder die mehreren zusätzlichen Funknetzknoten (115A-D) in einem CoMP-Satz des Vorrichtung-Vorrichtung-Clusters (204); und danach Senden von Daten über X2 an den einen oder die mehreren zusätzlichen Funknetzknoten (115A-D) nur für Daten, deren Empfang durch den Funknetzknoten (120) nicht bestätigt wurde.

9. Funknetzknoten (120), der drahtlose Vorrichtungen mit koordinierter Mehrfachpunkt (CoMP)-Datenübertragung bedient, umfassend:
einen oder mehrere Prozessoren (1020); und
Speicher (1030), der durch den einen oder die mehreren Prozessoren (1020) ausführbare Anweisungen enthält, wodurch der Funknetzknoten (120) für Folgendes betreibbar ist:
Übertragen einer ersten Anforderung zur Einleitung eines Suchmodus an eine Vielzahl von drahtlosen Vorrichtungen (110A-E) ;
Empfangen von Kanalqualitätsinformationen, die eine Qualität jedes Vorrichtung-Vorrichtung-Kommunikationskanals angeben, von jeder der Vielzahl von drahtlosen Vorrichtungen (110A-E);
Auswählen eines Teils der Vielzahl von drahtlosen Vorrichtungen (110A-D) zur Bildung eines Vorrichtung-Vorrichtung-Clusters (204) auf Grundlage einer oder mehrerer Ähnlichkeitsmetriken, die auf die von jeder der Vielzahl von drahtlosen Vorrichtungen (110A-E) empfangenen Kanalqualitätsinformationen angewendet werden;
Übertragen einer zweiten Anforderung zur Bildung des Vorrichtung-Vorrichtung-Clusters (204) an den Teil der Vielzahl von drahtlosen Vorrichtungen (110A-D), der zur Bildung des Vorrichtung-Vorrichtung-Clusters (204) ausgewählt wurde; und
Empfangen, von einem durch den Vorrichtung-Vorrichtung-Cluster (204) gebildeten virtuellen Mehrfacheingang-Mehrfachausgang (VMIMO)-Array, einer zusammengesetzten Datennachricht, die aus Datennachrichten gebildet ist, die dazu gedacht sind, durch jede drahtlose Vorrichtung des Teils der Vielzahl von drahtlosen Vorrichtungen (110A-D) innerhalb des Vorrichtung-Vorrichtung-Clusters (204) an einen jeweiligen Funknetzknoten, der die drahtlose Vorrichtung bedient, übertragen zu werden.

10. System, umfassend:
einen ersten Cluster (602A) einer ersten Vielzahl von drahtlosen Vorrichtungen (110), wobei der erste Cluster auf Grundlage einer oder mehrerer Ähnlichkeitsmetriken gebildet ist, wobei jede der ersten Vielzahl von drahtlosen Vorrichtungen (110) für Folgendes konfiguriert ist:
Austauschen von Daten mit einer verbleibenden ersten Vielzahl von drahtlosen Vorrichtungen innerhalb des ersten Clusters (602A), wobei die ausgetauschten Daten Daten umfassen, die dazu gedacht sind, durch jede der ersten Vielzahl von drahtlosen Vorrichtungen (110) innerhalb des ersten Clusters (602A) an einen jeweiligen Funknetzknoten (115A-E), der die drahtlose Vorrichtung (110) mit koordinierter Mehrfachpunkt (CoMP)-Datenübertragung bedient, übertragen zu werden;
Konkatenieren der Daten, die mit der verbleibenden ersten Vielzahl von drahtlosen Vorrichtungen in dem ersten Cluster (602A) ausgetauscht werden, zu einer zusammengesetzten Datennachricht; und
Bilden eines virtuellen Mehrfacheingang-Mehrfachausgang (VMIMO)-Arrays mit Antennen der ersten Vielzahl von drahtlosen Vorrichtungen (110) innerhalb des ersten Clusters (602A); und Übertragen der zusammengesetzten Datennachricht,
wobei mindestens ein Funknetzknoten von den Funknetzknoten (115A-E) dazu konfiguriert ist, die zusammengesetzte Datennachricht von dem VMIMO-Array, das durch den ersten Cluster (602A) der ersten Vielzahl von drahtlosen Vorrichtungen (110) gebildet ist, zu empfangen.

11. System nach Anspruch 10, wobei:
der erste Cluster (602A) der ersten Vielzahl von drahtlosen Vorrichtungen (110) umfasst:
eine erste drahtlose Vorrichtung, die durch einen ersten Funknetznoten bedient wird, der in einem ersten Frequenzbereich arbeitet; und
eine zweite drahtlose Vorrichtung, die durch einen zweiten Funknetzknoten bedient wird, der zu dem ersten Funknetznoten benachbart ist, wobei der zweite Funknetzknoten in einem zweiten Frequenzbereich arbeitet, der sich von dem ersten Frequenzbereich unterscheidet, um Interferenz abzuschwächen,
wobei die erste Vielzahl von drahtlosen Vorrichtungen innerhalb des ersten Clusters (602A) Daten in einem dritten Frequenzbereich austauschen, der sich von dem ersten Frequenzbereich und dem zweiten Frequenzbereich unterscheidet.

12. System nach Anspruch 11, ferner umfassend:
einen zweiten Cluster (602B) einer zweiten Vielzahl von drahtlosen Vorrichtungen (110), der für Folgendes konfiguriert ist:
Austauschen von Daten mit einer verbleibenden zweiten Vielzahl von drahtlosen Vorrichtungen innerhalb des zweiten Clusters (602B);
Konkatenieren der Daten, die mit der verbleibenden zweiten Vielzahl von Vorrichtungen in dem zweiten Cluster (602B) ausgetauscht werden, zu einer zusammengesetzten Datennachricht; und
Bilden eines virtuellen Mehrfacheingang-Mehrfachausgang (VMIMO)-Arrays mit Antennen der zweiten Vielzahl von drahtlosen Vorrichtungen (110) innerhalb des zweiten Clusters (602B); und
Übertragen der zusammengesetzten Datennachricht,
wobei mindestens eine drahtlose Vorrichtung innerhalb des zweiten Clusters (602B) durch den ersten Funknetzknoten, der in dem ersten Frequenzbereich arbeitet, bedient wird.

13. System nach Anspruch 12, wobei:
der zweite Cluster (602B) positioniert ist, um zu dem ersten Cluster (602A) benachbart zu sein, und
die zweite Vielzahl von drahtlosen Vorrichtungen (110) innerhalb des zweiten Clusters Daten in einem vierten Frequenzbereich austauschen, der sich von dem ersten, zweiten und dritten Frequenzbereich unterscheidet.

14. System nach Anspruch 12, wobei:
der zweite Cluster (602B) von dem ersten Cluster (602A) getrennt ist, sodass der zweite Cluster (602B) kein Nachbar des ersten Clusters (602A) ist, und
die zweite Vielzahl von drahtlosen Vorrichtungen (110) innerhalb des zweiten Clusters Daten in dem ersten Frequenzbereich austauschen.

15. System nach Anspruch 11, ferner umfassend einen Pico-Knoten (702), der den zweiten Cluster (602B) überspannt, wobei der Pico-Knoten innerhalb eines vierten Frequenzbereichs arbeitet, der sich von dem ersten, zweiten und dritten Frequenzbereich unterscheidet.

## Revendications

1. Dispositif de communication sans fil (110), comprenant :
un ou plusieurs processeurs (920) ; et
une mémoire (930) contenant des instructions exécutables par les un ou plusieurs processeurs (920), moyennant quoi le dispositif de communication sans fil (110) est configuré pour :
la transmission d'un signal de référencement à chacun d'une pluralité de dispositifs sans fil (110A-E) dans une plage du dispositif de communication sans fil (110) ;
la réception, à partir de la pluralité de dispositifs sans fil (110A-E), d'une pluralité de signaux de référencement ;
la formation d'une grappe de dispositif à dispositif (204) avec une partie de la pluralité de dispositifs sans fil (110AD), la grappe de dispositif à dispositif (204) étant formée sur la base d'une ou de plusieurs mesures de similarité ;
la réception, via une communication de dispositif à dispositif, d'un message de données provenant de chaque dispositif sans fil de la partie de la pluralité de dispositifs sans fil (110A-D) dans la grappe de dispositif à dispositif (204), les messages de données étant destinés à être transmis par chaque dispositif sans fil de la partie de la pluralité de dispositifs sans fil (110A-D) à un noeud de réseau radio respectif de noeuds de réseau radio (115A-D), le noeud de réseau radio respectif desservant le dispositif sans fil avec une transmission de données multipoint coordonnée, CoMP ;
la formation d'un message de données composite à partir des messages de données reçus ;
la formation d'un réseau virtuel d'entrées multiples et de sorties multiples, VMIMO, avec la partie de la pluralité de dispositifs sans fil (110A-D) dans la grappe de dispositif à dispositif (204) ; et
la transmission du message de données composite du réseau VMIMO aux noeuds de réseau radio (115A-D).

2. Dispositif de communication sans fil (110) selon la revendication 1, configuré en outre pour :
formater un ordre de transmission des messages de données reçus avant de transmettre le message de données composite aux noeuds de réseau radio (115A-D), l'ordre étant formaté sur la base d'une concaténation de signaux de référence de démodulation à partir de chaque dispositif sans fil de la partie de la pluralité de dispositifs sans fil (110A-D) dans la grappe de dispositif à dispositif (204).

3. Dispositif de communication sans fil selon la revendication 1, configuré en outre pour :
appliquer une pondération à chaque antenne de la partie de la pluralité de dispositifs sans fil (110A-D), avant de transmettre le message de données composite aux noeuds de réseau radio (115A-D), dans la grappe de dispositif à dispositif (204), dans lequel la pondération appliquée à chaque antenne respective de la partie de la pluralité de dispositifs sans fil (110A-D) est sélectionnée pour maximiser l'un parmi un débit global à une sortie d'une communication multipoint coordonnée, CoMP, et un débit vers un noeud de réseau radio dans les noeuds de réseau radio (115A-D) avec les meilleurs indicateurs de qualité de canal, CQI.

4. Procédé dans un dispositif de communication sans fil (110), comprenant :
la transmission (300) d'un signal de référencement à chacun d'une pluralité de dispositifs sans fil (110A-E) dans une plage du dispositif de communication sans fil (110) ;
la réception, à partir de la pluralité de dispositifs sans fil (110A-E), d'une pluralité de signaux de référencement ;
la formation (304) d'une grappe de dispositif à dispositif (204) avec une partie de la pluralité de dispositifs sans fil (110A-D), la grappe de dispositif à dispositif (204) étant formée sur la base d'une ou de plusieurs mesures de similarité ;
la réception (306), via une communication de dispositif à dispositif, d'un message de données provenant de chaque dispositif sans fil de la partie de la pluralité de dispositifs sans fil (110A-D) dans la grappe de dispositif à dispositif (204), les messages de données étant destinés à être transmis par chaque dispositif sans fil de la partie de la pluralité de dispositifs sans fil (110A-D) à un noeud de réseau radio respectif de noeuds de réseau radio (115A-D), le noeud de réseau radio respectif desservant le dispositif sans fil avec une transmission de données multipoint coordonnée,
CoMP ;
la formation (308) d'un message de données composite à partir des messages de données reçus ;
la formation (310) d'un réseau virtuel d'entrées multiples et de sorties multiples, VMIMO, avec la partie de la pluralité de dispositifs sans fil (110A-D) dans la grappe de dispositif à dispositif (204) ; et
la transmission (312) du message de données composite du réseau VMIMO aux noeuds de réseau radio (115A-D).

5. Procédé selon la revendication 4, comprenant en outre :
le formatage d'un ordre de transmission du message de données composite avant de transmettre le message de données composite aux noeuds de réseau radio (115A-D), l'ordre formaté du message de données composite étant basé sur une concaténation de signaux de référence de démodulation reçus à partir de chaque dispositif sans fil de la partie de la pluralité de dispositifs sans fil (110A-D) dans la grappe de dispositif à dispositif (204).

6. Procédé selon la revendication 4, comprenant en outre : l'application d'une pondération à chaque antenne de la partie de la pluralité de dispositifs sans fil (110A-D), avant de transmettre le message de données composite aux noeuds de réseau radio (115A-D), dans la grappe de dispositif à dispositif (204), dans lequel la pondération appliquée à chaque antenne respective de la partie de la pluralité de dispositifs sans fil (110A-D) est sélectionnée pour maximiser l'un parmi un débit global à une sortie d'une communication multipoint coordonnée, CoMP, et un débit vers un noeud de réseau radio dans les noeuds de réseau radio (115A-D) avec les meilleurs indicateurs de qualité de canal, CQI.

7. Procédé dans un noeud de réseau radio (120) desservant des dispositifs sans fil avec une transmission de données multipoint coordonnée, CoMP, comprenant :
la transmission (300), à une pluralité de dispositifs sans fil (110A-E), d'une première demande d'initiation d'un mode de découverte ;
la réception, à partir de chacun de la pluralité de dispositifs sans fil (110A-E), des informations de qualité de canal indiquant une qualité de chaque canal de communication de dispositif à dispositif ;
la sélection (304), sur la base d'une ou de plusieurs mesures de similarité appliquées aux informations de qualité de canal reçues de chacun de la pluralité de dispositifs sans fil (110A-E), d'une partie de la pluralité de dispositifs sans fil (110A-D) pour la formation d'une grappe de dispositif à dispositif (204) ;
la transmission, à la partie de la pluralité de dispositifs sans fil (110A-D) sélectionnée pour la formation de la grappe de dispositif à dispositif (204), d'une seconde demande de formation de la grappe de dispositif à dispositif (204) ; et
la réception (312), à partir d'un réseau virtuel d'entrées multiples et de sorties multiples, VMIMO, d'un réseau formé par la grappe de dispositif à dispositif (204), d'un message de données composite formé de messages de données destinés à être transmis par chaque dispositif sans fil de la partie de la pluralité de dispositifs sans fil (110A-D) dans la grappe de dispositif à dispositif (204), vers un noeud de réseau radio respectif desservant le dispositif sans fil.

8. Procédé selon la revendication 7, dans lequel le noeud de réseau radio (120) est en outre configuré pour minimiser les exigences de liaison terrestre multipoint coordonnée, CoMP, par :
la détermination que le noeud de réseau radio (120) est capable de décoder un ou plusieurs éléments parmi la partie de la pluralité de dispositifs sans fil (110A-D) et que le noeud de réseau radio (120) dessert dans la grappe de dispositif à dispositif (204) ;
l'envoi d'un accusé de réception, ACK, aux un ou plusieurs noeuds de réseau radio supplémentaires (115A-D) dans un ensemble CoMP de la grappe de dispositif à dispositif (204) ; puis
l'envoi de données sur X2 aux un ou plusieurs noeuds de réseau radio supplémentaires (115A-D) pour des données qui n'ont pas été reconnues par le noeud de réseau radio (120).

9. Noeud de réseau radio (120) desservant des dispositifs sans fil avec une transmission de données multipoint coordonnée, CoMP, comprenant :
un ou plusieurs processeurs (1020) ; et
une mémoire (1030) contenant des instructions exécutables par les un ou plusieurs processeurs (1020), moyennant quoi le dispositif de communication sans fil (120) est configuré pour :
la transmission, à une pluralité de dispositifs sans fil (110A-E), d'une première demande d'initiation d'un mode de découverte ;
la réception, à partir de chacun de la pluralité de dispositifs sans fil (110A-E), des informations de qualité de canal indiquant une qualité de chaque canal de communication de dispositif à dispositif ;
la sélection, sur la base d'une ou de plusieurs mesures de similarité appliquées aux informations de qualité de canal reçues de chacun de la pluralité de dispositifs sans fil (110A-E), d'une partie de la pluralité de dispositifs sans fil (110A-D) pour la formation d'une grappe de dispositif à dispositif (204) ;
la transmission, à la partie de la pluralité de dispositifs sans fil (110A-D) sélectionnée pour la formation de la grappe de dispositif à dispositif (204), d'une seconde demande de formation de la grappe de dispositif à dispositif (204) ; et
la réception, à partir d'un réseau virtuel d'entrées multiples et de sorties multiples, VMIMO, d'un réseau formé par la grappe de dispositif à dispositif (204), d'un message de données composite formé de messages de données destinés à être transmis par chaque dispositif sans fil de la partie de la pluralité de dispositifs sans fil (110A-D) dans la grappe de dispositif à dispositif (204), vers un noeud de réseau radio respectif desservant le dispositif sans fil.

10. Système comprenant :
une première grappe (602A) d'une première pluralité de dispositifs sans fil (110), la première grappe étant formée sur la base d'une ou de plusieurs mesures de similarité,
chacun de la première pluralité de dispositifs sans fil (110) étant configuré pour :
l'échange de données avec la première pluralité restante de dispositifs sans fil dans la première grappe (602A), dans lequel les données échangées comprennent des données destinées à être transmises par chacun de la première pluralité de dispositifs sans fil (110) dans la première grappe (602A) à un noeud de réseau radio respectif (115A-E) desservant le dispositif sans fil (110) avec une transmission de données multipoint coordonnée, CoMP ;
la concaténation des données échangées avec la première pluralité restante de dispositifs sans fil dans la première grappe (602A) en un message de données composite ; et
la formation d'un réseau virtuel d'entrées multiples et de sorties multiples, VMIMO, avec des antennes de la première pluralité de dispositifs sans fil (110) dans la première grappe (602A) ; et
la transmission du message de données composite ;
dans lequel au moins un noeud de réseau radio des noeuds de réseau radio (115A-E) est configuré pour recevoir, à partir du réseau VMIMO formé par la première grappe (602A) de la première pluralité de dispositifs sans fil (110), le message de données composite.

11. Système selon la revendication 10, dans lequel :
la première grappe (602A) de la première pluralité de dispositifs sans fil (110) comprend :
un premier dispositif sans fil desservi par un premier noeud de réseau radio fonctionnant dans une première plage de fréquences ; et
un second dispositif sans fil desservi par un second noeud de réseau radio voisin du premier noeud de réseau radio, le second noeud de réseau radio fonctionnant dans une deuxième plage de fréquences distincte de la première plage de fréquences afin d'atténuer les interférences, dans lequel la première pluralité de dispositifs sans fil comprise dans la première grappe (602A) échangent des données sur une troisième plage de fréquences distincte de la première plage de fréquences et de la deuxième plage de fréquences.

12. Système selon la revendication 11, comprenant en outre :
une seconde grappe (602B) d'une seconde pluralité de dispositifs sans fil (110) configurée pour :
l'échange de données avec la seconde pluralité restante de dispositifs sans fil dans la seconde grappe (602B) ;
la concaténation des données échangées avec la seconde pluralité restante de dispositifs dans la seconde grappe (602B) en un message de données composite ; et
la formation d'un réseau virtuel d'entrées multiples et de sorties multiples, VMIMO, avec des antennes de la seconde pluralité de dispositifs sans fil (110) dans la seconde grappe (602B) ; et
la transmission du message de données composite,
dans lequel au moins un dispositif sans fil dans la seconde grappe (602B) est desservi par le premier noeud de réseau radio fonctionnant dans la première plage de fréquences.

13. Système selon la revendication 12, dans lequel :
la seconde grappe (602B) est positionnée pour se rapprocher de la première grappe (602A), et
la seconde pluralité de dispositifs sans fil (110) dans la seconde grappe échangent des données sur une quatrième plage de fréquences qui est distincte des première, deuxième et troisième plages de fréquences.

14. Système selon la revendication 12, dans lequel :
la seconde grappe (602B) est séparée de la première grappe (602A) de sorte que la seconde grappe (602B) n'est pas voisine de la première grappe (602A), et
la seconde pluralité de dispositifs sans fil dans (110) la seconde grappe échangent des données sur la première plage de fréquences.

15. Système selon la revendication 11, comprenant en outre un pico-noeud (702) couvrant la seconde grappe (602B), le pico-noeud fonctionnant dans une quatrième plage de fréquences distincte des première, deuxième et troisième plages de fréquences.
